# EUROPÄISCHE PATENTANMELDUNG

(11) **EP 1 624 178 A1**
(43) Veröffentlichungstag der Anmeldung: **08.02.2006**
(21) Anmeldenummer: 05016490.4
(22) Anmeldetag: 29.07.2005
(51) Int. Cl.: F02K 9/38, F42B 39/20

(54) **Raketenmotor**

(30) Priorität: 05.08.2004 DE 102004038039
(71) Anmelder: Diehl BGT Defence GmbH & Co.KG, 88662 Überlingen (DE)
(72) Erfinder: von Entress-Fürsteneck, Wolfgang, 90518 Altdorf/Rasch (DE); Kugler, Dietmar, 91242 Ottensoos (DE)
(74) Vertreter: Diehl Patentabteilung

(57) **Zusammenfassung**

Es wird ein Raketenmotor (10) mit einem Motorgehäuse (12) für einen Treibsatz beschrieben, wobei das Motorgehäuse (12) eine Trenneinrichtung (16) aufweist, die das Motorgehäuse (12) an einer definierten Stelle mittels eines pyrotechnischen Elementes (18) gezielt auftrennt, wenn bei Lagerung oder Transport des Raketenmotors (10) eine bestimmte Temperatur auftritt. Auf diese Weise wird ein unzulässiger Druckaufbau im Raketenmotor (10) verhindert.

## Beschreibung

Die Erfindung betrifft einen Raketenmotor mit einem Motorgehäuse.

Derartige Raketenmotoren werden u. a. so genannten Fast Cook-Bedingungen unterzogen. Dabei werden die Raketenmotoren sehr schnell Temperaturen von beispielsweise ≥ 850° bis 950° Celsius ausgesetzt, wobei eine Detonation vermieden werden soll.

Der Erfindung liegt also die Aufgabe zugrunde, einen Raketenmotor zu schaffen, wobei das Motorgehäuse bei einer definierten Außentemperatur definiert aufgetrennt oder so geschwächt wird, dass eine ungewollte Detonation verhindert wird.

Diese Aufgabe wird erfindungsgemäß durch die Merkmale des Anspruches 1 gelöst. Bevorzugte Aus- bzw. Weiterbildungen des erfindungsgemäßen Raketenmotors sind in den Unteransprüchen gekennzeichnet.

Dadurch, dass das Motorgehäuse des erfindungsgemäßen Raketenmotors eine Trenneinrichtung aufweist, die das Motorgehäuse an einer definierten Stelle mittels eines pyrotechnischen Elementes auftrennt oder definiert schwächt, wenn bei Lagerung, Handhabung oder Transport der Rakete eine bestimmte Temperatur auftritt, wird die Verdämmung des Raketenmotors mittels des pyrotechnischen Elementes gezielt aufgehoben, d.h. ein unzulässiger Druckaufbau in dem einen Treibsatz enthaltenden Motorgehäuse verhindert. Der Treibsatz verbrennt also oder er deflakriert, d.h. der Druckaufbau ist gering.

Damit das pyrotechnische Element beim Transport oder bei der Lagerung des Raketenmotors nicht vorzeitig ausgelöst wird, ist die besagte Trenneinrichtung vorgesehen, die den einschlägigen Vorschriften einer Zünd- und Sicherungseinrichtung genügen muss.

Die Trenneinrichtung dient dazu, das Motorgehäuse an einer definierten Stelle pyrotechnisch aufzutrennen oder zu schwächen, wenn bei der Lagerung, Handhabung oder beim Transport des Raketenmotors eine bestimmte Temperatur von z.B. ≥ 550° C auftritt. Dabei ist wesentlich, dass eine erste Entsicherungsfunktion eine sichere Handhabung der Trenneinrichtung erlaubt. Die besagte Trenneinrichtung soll nur bei Transport, Handhabung und Lagerung des Raketenmotors die erforderliche Funktionssicherheit gewährleisten; während des Fluges soll die Trenneinrichtung absolut sicher sein, d.h. nicht funktionieren. Das ist beispielsweise mittels einer Verbandssicherung realisierbar, die, solange die Sicherung besteht, die Funktion der Trenneinrichtung ermöglicht; beim Entfernen diese Funktion jedoch aufhebt. Das kann beispielsweise durch einen Schalter, einen Sicherungsstift oder dergleichen geschehen.

Nachdem bei einem Raketenmotor ursprünglich elektrische Energie nicht zur Verfügung steht, hat es sich als vorteilhaft erwiesen, wenn die Trenneinrichtung eine Umwandeleinrichtung zur Umwandlung von Wärmeenergie in elektrische Energie aufweist. Diese Umwandeleinrichtung kann eine aktivierbare Thermalbatterie oder einen Thermogenerator aufweisen. Desgleichen ist es möglich, dass die Umwandeleinrichtung mindestens ein Peltierelement aufweist. Zur Zwischenspeicherung der mittels der Umwandeleinrichtung generierten elektrischen Energie kann die Umwandeleinrichtung mit einem Speicherkondensator verbunden sein.

Die Umwandeleinrichtung ist zweckmäßigerweise mit einem Auslöseelement zur Bewegung einer Einheit mit einem Detonator gekoppelt; diese Auslöseeinrichtung kann bspw. eine Schmelzsicherung oder ein Memoriemetallelement aufweisen.

Bevorzugt ist es, wenn die Trenneinrichtung nicht nur eine Temperatursensiereinrichtung und eine Zündeinrichtung aufweist, sondern wenn ein zusätzlicher Temperatursensor vorgesehen ist.

Die mit Hilfe des Auslöseelementes bewegbare Einheit kann einen Schieber, einen Rotor oder eine damit kombinierte Barriere aufweisen.

Weitere Einzelheiten, Merkmale und Vorteile ergeben sich aus der nachfolgenden Beschreibung der Erfindung anhand der anschließenden Zeichnungen.

Es zeigen:
- Figur 1: schematisch längsgeschnitten einen Abschnitt einer Ausbildung des Raketenmotors,
- Figur 2: schematisch in einer Blockdarstellung eine Trenneinrichtung des Raketenmotors gemäß Figur 1,
- Figur 3: schematisch in einer Blockdarstellung eine Ausbildung der Umwandeleinrichtung der Trenneinrichtung gemäß Figur 2,
- Figur 4: in einer Blockdarstellung eine elektronische Lösung der Trenneinrichtung, und
- Figur 5: in einer Blockdarstellung eine mechanische Lösung der Trenneinrichtung.

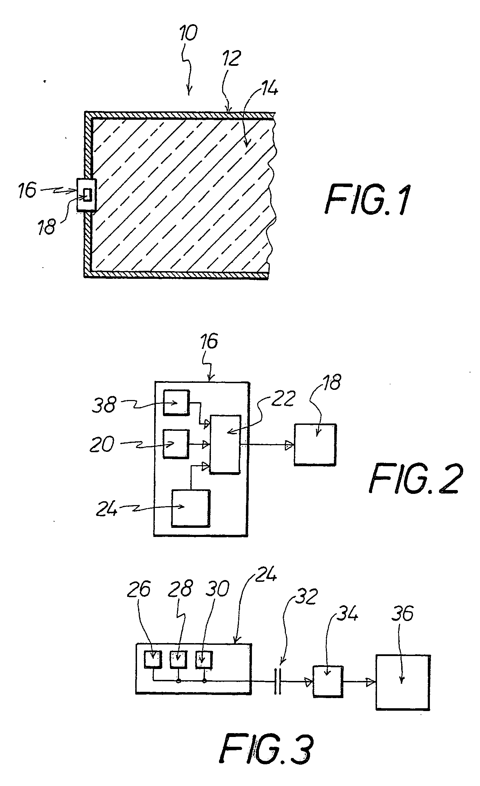

Figur 1 zeigt schematisch in einer Längsschnittdarstellung einen Abschnitt eines Raketenmotors 10 mit einem Motorgehäuse 12, in dem ein Treibsatz 14 vorgesehen ist.

Um im Motorgehäuse 12 bei der Lagerung oder beim Transport des Raketenmotors 10 einen unzulässigen Druckaufbau d.h. eine Detonation des Treibsatzes 14 zu vermeiden, wenn der Raketenmotor 10 einer bestimmten Temperatur ausgesetzt wird, weist das Motorgehäuse 12 eine Trenneinrichtung 16 (Fast Cook-Off Mitigation Device) auf. Die Trenneinrichtung 16 trennt das Motorgehäuse 12 an einer definierten Stelle mittels eines pyrotechnischen Elementes 18 auf, oder schwächt das Motorgehäuse 12 definiert, wenn bei der Lagerung, Handhabung oder beim Transport des Raketenmotors 10 eine bestimmte Temperatur auftritt. Diese Temperatur kann beispielsweise 550° C betragen.

Die Trenneinrichtung 16 weist eine Temperatursensoreinrichtung 20 und eine mit dieser verbundenen Zündeinrichtung 22 auf (siehe Figur 2).

Nachdem ursprünglich keine elektrische Energie zur Verfügung steht, weist die Trenneinrichtung 16 zur Umwandlung von Wärmeenergie in elektrische Energie eine Umwandeleinrichtung 24 auf, mittels welcher die Zündeinrichtung 22 mit elektrischer Energie versorgt wird. Die Umwandeleinrichtung 24 kann eine aktivierbare Thermalbatterie 26 und/oder einen Thermogenerator 28 und/oder ein Peltierelement 30 (siehe Figur 3) aufweisen. Zur Zwischenspeicherung der von der Thermalbatterie 26 und/oder dem Thermogenerator 28 und/oder dem Peltierelement 30 erzeugten elektrischen Energie kann die Umwandeleinrichtung 24 mit einem Speicherkondensator 32 verbunden d.h. zusammengeschaltet sein.

Wie die Figur 3 des Weiteren schematisch in einer Blockdarstellung verdeutlicht, ist die Umwandeleinrichtung 24 mit einem Auslöseelement 34 gekoppelt, das zur Bewegung einer Einheit mit einem Detonator vorgesehen ist. Diese Einheit mit einem Detonator ist in Figur 3 mit der Bezugsziffer 36 bezeichnet. Die Auslöseeinrichtung 34 kann eine Schmelzsicherung oder ein Memoriemetallelement aufweisen. Die Einheit 36 kann einen Schieber, einen Rotor oder eine mit einem Schieber oder einem Rotor kombinierte Barriere aufweisen.

Die Figur 2 verdeutlicht einen zusätzlichen Temperatursensor 38, der mit der Zündeinrichtung 22 zusammengeschaltet ist. Mit der Bezugsziffer 18 ist auch in Figur 2 das pyrotechnische Element bezeichnet, das mit der Zündeinrichtung 22 wirkverbunden ist.

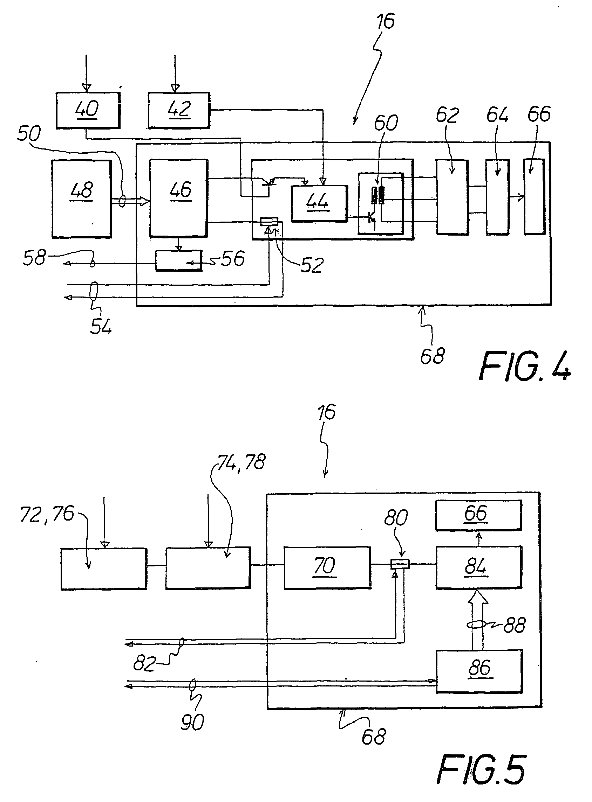

Figur 4 verdeutlicht in einer Blockdarstellung eine elektronische Lösung der Trenneinrichtung 16 mit einem Hitze bzw. Feuer detektierenden Bimetallsensor 40 und einem Temperatursensor 42, die mit einer Zündlogikschaltung 44 zusammengeschaltet sind. Die Zündlogikschaltung 44 ist eingangsseitig außerdem mit einer Thermalbatterie 46 zusammengeschaltet, die mittels eine Lötstellenelementes 48 aktivierbar ist. Diese Aktivierbarkeit ist durch den Pfeil 50 verdeutlicht. Die Thermalbatterie 46 ist ausgangsseitig außerdem mit einer Schmelzsicherung 52 verbunden, die zur Anzeige dient, ob eine Zündung erfolgt ist oder nicht. Das ist durch die beiden Pfeillinien 54 verdeutlicht.

Die Thermalbatterie 46 ist ausgangsseitig außerdem mit einem Bimetallsensor 56 verbunden, der zur Anzeige der Aktivierung der Thermalbatterie 46 dient. Das ist durch die Pfeillinie 58 schematisch verdeutlicht.

Die Zündlogikschaltung 44 ist ausgangsseitig mit einem Transformator 60 zusammengeschaltet, dessen Sekundärseite mit einer Zündschaltung 62 verbunden ist. Die Zündschaltung ist mit einem Exploding Foil Initiator (EFI) zusammengeschaltet, der mit der Bezugsziffer 64 bezeichnet ist. Der Exploding Foil Initiator 64 ist mit einem Zündverstärker 66 wirkverbunden.

Der Block 68 verdeutlicht schematisch die Wärmeabschirmung des Motorgehäuses 12 des Raketenmotors 10 (siehe Figur 1).

Die Ausbildung gemäß Figur 4 besteht aus den folgenden Hauptkomponenten:
- metallisches Gehäuse 12 (siehe Figur 1)
- thermische Isolation 68
- Thermalbatterie 46 mit Schmelzsicherung 48
- Bimetallsensor 40
- Temperatursensor 42
- Zündschaltung 62
- Steuerelektronik 44
- EFI-Detonator 64
- flexible Leitung zur elektrischen Anbindung des EFI-Detonators 64 an die Einheit.

Bei dieser Ausbildung gemäß Figur 4 sind entweder der Bimetallsensor 40 und die Schmelzsicherung 48 oder der Temperatursensor 42 und die Schmelzsicherung 48 oder der Bimetallsensor 40 und der Temperatursensor 42 ohne die Schmelzsicherung 48 in Funktion.

Die gesamte Einheit ist in ein metallisches Gehäuse integriert. Das metallische Gehäuse ist gegenüber der Außenumgebung thermisch isoliert. Die Einheit muss den einschlägigen Vorschriften der STANAG 4187 genügen. Die geforderten Entsicherungskriterien werden wie folgt erfüllt und sichergestellt:

### Kriterium I:

Die Schmelzsicherung 48 wird bei einer Temperatur von ≥ 400° C freigegeben und aktiviert die Thermalbatterie 46. Die Thermalbatterie 46 liefert dann die elektrische Energie zum Betreiben der Einheit d.h. der Steuerelektronik 44 und der Zündstufe.

### Kriterium II:

Nachdem der Temperatursensor 42 die definierte Temperatur sensiert hat, wird über den Transformator 60 der Zündkondensator 32 (siehe Figur 3) der Zündstufe aufgeladen. Nach der korrekten Aufladung des Zündkondensators wird der EFI-Detonator 64 gezündet und damit die pyrotechnische Auftrennung des Motorgehäuses 12 durch Aktivierung des pyrotechnischen Elementes 18 initiiert.

Über Zuleitungen ist es möglich, verschiedene Zustände der Einheit - durch das übergeordnete System - zu überprüfen. Hierbei handelt es sich z.B. um die Thermalbatterie-Aktivierung, die in Figur 4 durch den Pfeil 58 angedeutet ist; und den Zustand der Zündschaltung (sicher-safe bzw. aktiviert-arm).

Figur 5 zeigt in einer der Figur 4 prinzipiell ähnlichen Blockdarstellung eine mechanische Lösung der Trenneinrichtung 16 mit einem Schieber 70, der mit einer ersten mechanischen Verriegelung 72 und mit einer zweiten mechanischen Verriegelung 74 verbunden ist. Die erste mechanische Verriegelung 72 ist von einem Bimetallstreifen 76 gebildet. Die zweite mechanische Verriegelung 74 ist von einem Lötstellenelement 78 gebildet.

Der Schieber 70 ist beispielsweise mittels einer Druckfeder antreibbar. Der Schieber 70 ist mit einem Schalter 80 wirkverbunden, der zur Anzeige einer Sicherstellung bzw. einer Scharfstellung dient, was durch die Pfeillinien 82 schematisch angedeutet sind.

Der Schieber 70 ist mit einem Anstichdetonator 84 wirkverbunden, und der Schalter 80 befindet sich in dieser Wirkverbindung. Der Anstichdetonator 84 ist mit einem elektrischen Detonator 86 wirkverbunden, was durch den Pfeil 88 angedeutet ist. Der elektrische Detonator 86 dient zur Darstellung eines Zündhemmungssignales. Das ist durch die beiden Pfeillinien 88 verdeutlicht.

Der Anstichdetonator 84 ist mit einem Zündverstärker 66 wirkverbunden.

Die Einheit gemäß Figur 5 besteht aus den folgenden Hauptkomponenten:
- metallisches Gehäuse 12
- thermische Isolation 68
- mechanischer Schieber 70 mit Anstichdetonator 84
- Schmelzsicherung 48
- Druckfeder für Schieber 70
- Bimetallfeder 76
- elektrischer Detonator 86
- Zündverstärker 66

Die gesamte Einheit ist in ein metallisches Gehäuse 12 integriert. Das metallische Gehäuse 12 ist gegenüber der Außenumgebung mittels einer Wärmeabschirmung 68 thermisch isoliert.

Die Einheit muss den einschlägigen Vorschriften einer Sicherungsvorrichtung genügen. Die geforderten Entsicherungskriterien werden wie folgt erfüllt und sichergestellt: Der mechanische Schieber wird durch die folgenden Ereignisse freigegeben:

### Kriterium I:

Die Bimetallfeder 76 vorentriegelt den Schieber 70 bei einer definierten Temperatur.

### Kriterium II:

Die Schmelzsicherung 78 wird bei einer Temperatur von ≥ 450° C freigegeben und gibt dadurch den mechanischen Schieber 70 endgültig frei. Der mechanische Schieber 70 bewegt sich mit Hilfe eines Federelementes (Druckfeder) in eine Position, in der der Anstichdetonator 84 durch eine in dieser Endposition montierten Anstichnadel aktiviert wird. Der Detonator wird dadurch aktiviert und zündet über eine pyrotechnische Verstärkerladung 66 die pyrotechnische Auftrennung des Motorgehäuses 12.

Über Zuleitungen können verschiedene Zustände der Einheit - durch das übergeordnete System - überprüft werden: Anstichdetonator 84 gezündet - zwei elektrische Leitungen werden auftrennt - die Position des mechanischen Schiebers 70 wird durch einen elektrischen Schalter identifiziert - der elektrische Detonator 86 wird über zwei Leitungen überprüft, die bei der Zündung des Detonators zerstört werden.

### Bezugsziffernliste:

- 10: Raketenmotor
- 12: Motorgehäuse (von 10)
- 14: Treibsatz (in 12)
- 16: Trenneinrichtung (für 12)
- 18: Pyrotechnisches Element (von 16 für 12)
- 20: Temperatursensiereinrichtung (von 16)
- 22: Zündeinrichtung (von 16)
- 24: Umwandeleinrichtung (von 16 für 22)
- 26: Thermalbatterie (von 24)
- 28: Thermogenerator (von 24)
- 30: Peltierelement (von 24)
- 32: Speicherkondensator (an 24)
- 34: Auslöseeinrichtung (bei 24)
- 36: Einheit mit Detonator (an 34)
- 38: Zusätzlicher Temperatursensor (von 16)
- 40: Bimetallsensor
- 42: Temperatursensor
- 44: Zündlogistikschaltung
- 46: Thermalbatterie
- 48: Lötstellenelement
- 50: Pfeil (zwischen 48 und 46)
- 52: Schmelzsicherung (bei 46)
- 54: Pfeillinien
- 56: Bimetallsensor (bei 46)
- 58: Pfeil
- 60: Transformator (an 44)
- 62: Zündschaltung (an 60)
- 64: EFI-Detonator (an 62)
- 66: Zündverstärker (an 64)
- 68: Wärmeabschirmung (von 16)
- 70: Schieber (von 16)
- 72: erste mechanische Verriegelung (von 70)
- 74: zweite mechanische Verriegelung (von 70)
- 76: Bimetallstreifen (von 72)
- 78: Lötstellenelement (von 74)
- 80: Schalter (zwischen 70 und 84)
- 82: Pfeillinien (bei 80)
- 84: Anstichdetonator (an 70)
- 86: Elektrischer Detonator (bei 84)
- 88: Pfeil (zwischen 86 und 84)
- 90: Pfeillinien (bei 86)

## Patentansprüche

1. Raketenmotor mit einem Motorgehäuse,
**dadurch gekennzeichnet,**
**dass** das Motorgehäuse (12) eine Trenneinrichtung (16) aufweist, die das Motorgehäuse (12) an einer definierten Stelle mittels eines pyrotechnischen Elementes (18) definiert schwächt oder auftrennt, wenn bei Lagerung, Handhabung oder Transport des Raketenmotors (10) eine bestimmte Temperatur auftritt.

2. Raketenmotor nach Anspruch 1,
**dadurch gekennzeichnet,**
**dass** die Trenneinrichtung (16) eine Temperatursensiereinrichtung (20) und eine Zündeinrichtung (22) aufweist.

3. Raketenmotor nach Anspruch 1 oder 2,
**dadurch gekennzeichnet,**
**dass** die Trenneinrichtung (16) eine Umwandeleinrichtung (24) zur Umwandlung von Wärmeenergie in elektrische Energie aufweist.

4. Raketenmotor nach Anspruch 3,
**dadurch gekennzeichnet,**
**dass** die Umwandeleinrichtung (24) eine aktivierbare Thermalbatterie (26) aufweist.

5. Raketenmotor nach Anspruch 3,
**dadurch gekennzeichnet,**
**dass** die Umwandeleinrichtung (24) einen Thermogenerator (28) aufweist.

6. Raketenmotor nach Anspruch 2,
**dadurch gekennzeichnet,**
**dass** die Umwandeleinrichtung (24) mindestens ein Peltierelement (30) aufweist.

7. Raketenmotor nach einem der Ansprüche 3 bis 6,
**dadurch gekennzeichnet,**
**dass** die Umwandeleinrichtung (24) mit einem Speicherkondensator (32) verbunden ist.

8. Raketenmotor nach einem der Ansprüche 3 bis 7,
**dadurch gekennzeichnet,**
**dass** die Umwandeleinrichtung (24) mit einer Auslöseeinrichtung (34) zur Bewegung einer Einheit (36) mit einem Detonator gekoppelt ist.

9. Raketenmotor nach Anspruch 8,
**dadurch gekennzeichnet,**
**dass** die Auslöseeinrichtung (34) eine Schmelzsicherung aufweist.

10. Raketenmotor nach Anspruch 8,
**dadurch gekennzeichnet,**
**dass** die Auslöseeinrichtung (34) ein Memoriemetallelement aufweist.

11. Raketenmotor nach einem der Ansprüche 3 bis 10,
**dadurch gekennzeichnet,**
**dass** ein zusätzlicher Temperatursensor (38) vorgesehen ist.

12. Raketenmotor nach einem der Ansprüche 3 bis 11,
**dadurch gekennzeichnet,**
**dass** die Einheit (36) einen Schieber aufweist.

13. Raketenmotor nach einem der Ansprüche 3 bis 11,
**dadurch gekennzeichnet,**
**dass** die Einheit (36) einen Rotor aufweist.

14. Raketenmotor nach einem der Ansprüche 3 bis 11,
**dadurch gekennzeichnet,**
**dass** die Einheit (36) eine Barriere aufweist.
